# EUROPEAN PATENT SPECIFICATION

(11) **EP 4 344 396 B1**
(45) Date of publication and mention of the grant of the patent: **09.07.2025**
(21) Application number: 22723727.8
(22) Date of filing: 05.05.2022
(51) Int. Cl.: A01G 9/02

(54) **A POT ASSEMBLY AND STAGGER SYSTEM FOR A VERTICAL GARDEN**
TOPFANORDNUNG UND STAFFELUNGSSYSTEM FÜR EINEN VERTIKALEN GARTEN
ENSEMBLE POT ET SYSTÈME DE DÉCALAGE POUR JARDIN VERTICAL

(30) Priority: 05.05.2021 GB 202106420
(43) Date of publication of application: 03.04.2024
(73) Proprietor: Patterson & Rothwell Limited, Oldham Lancashire OL4 1HH (GB); MCKEEVER GROUP LIMITED, Chorley PR71PS (GB)
(72) Inventor: MCKEEVER, Richard James Peter, Preston Lancashire PR7 7DG (GB); PATEL, Sachin, Bolton Greater Manchester BL4 0HY (GB)
(74) Representative: Wilson Gunn
(86) International application number: PCT/GB2022/051141
(87) International publication number: WO 2022/234280

(56) References cited:
- EP-A1- 3 202 249
- WO-A2-2012/129522
- CN-U- 204 119 871
- TW-U- M 423 436
- US-A1- 2016 366 836
- US-A1- 2020 305 355

## Description

### Technical Field of the Invention

The present invention relates generally to the field of pots for vertical or wall gardens. In particular, but not exclusively, the invention concerns a pot and pot system that allows a number of pots/pot assemblies to be mounted relative to one another and water to drain from upper pots/pot assemblies into lower pots/pot assemblies.

### Background to the Invention

European Patent No. 3202249 discloses a stagger stacked flowerpot and stereo greening wall space formed by combining of flowerpots in stagger stacked mode.

European Patent No. 3202249 discloses a stagger stacked flowerpot, comprising a flowerpot body provided with at least a cavity for holding a seedling pot having a bottom hole or a soil baffle having a pervious hole, wherein the bottom of the cavity is a water storage space, a drain hole with an upward opening is arranged at the bottom of the flowerpot body, the drain hole is approximately as high as the maximum water level in the water storage space, the water in the water storage space overflows out from the drain hole and then flows into the water storage space of the lower body below the current flowerpot body, a bracing edge and a bracing position are arranged at the top of the flowerpot body, a snap groove is set at the bottom of the flowerpot body, and the bracing edge and bracing position of the current flowerpot body are configured to be snapped into the snap groove of the upper body above the flowerpot body, so that the flowerpot bodies of the adjacent two layers are combined in the stagger-stacking mode and a front bracing and a rear bracing are arranged in the cavity and configured to brace the seedling pot or the soil baffle.

The stagger stacked flowerpot in European Patent No. 3202249 is characterized in that the horizontal position of the bottom hole of the seedling or the pervious hole of the soil baffle in the cavity is lower than the drain hole, and the top part of the cavity leans out with a dip angle α, so that the barycenter P of the seedling pot in the cavity is within the range of the bottom diameter of the seedling pot.

Embodiments of the invention seek to at least partially overcome or ameliorate any one or more of the abovementioned disadvantages or provide the consumer with a useful or commercial choice.

### Summary of the Invention

According to a first aspect of the invention there is provided a pot assembly for a vertical garden, the pot assembly comprising:
at least one pot holder provided with at least an angled volume for holding a pot and an angled base wall;
a drain sump with a drain opening through which liquid exits the pot assembly and a drain sump entry located in the angled base wall, the drain opening in the drain sump located below the drain sump entry; and
a water collection reservoir located above the drain sump entry and provided with an overflow weir over which liquid flows into the angled volume of the at least one pot holder.

Providing a pot assembly with these features results in creation of a circuitous flow path for liquid entering the pot assembly which effectively captures liquid to feed a plant in the at least one pot holder.

According to a second aspect of the invention there is provided a stagger stacked pot system for a vertical garden, the system comprising two or more pot assemblies, at least some of the pot assemblies comprising:
at least one pot holder provided with at least an angled volume for holding a pot and an angled base wall;
a drain sump with a drain opening through which liquid exits the pot assembly and a drain sump entry located in the angled base wall, the drain opening in the drain sump located below the drain sump entry;
a water collection reservoir located above the drain sump entry and provided with an overflow weir over which liquid flows into the angled volume of the at least one pot holder;
wherein the pot assemblies are provided in at least one upper row and at least one lower row with the drain outlet of at least one pot assembly in the at least one upper row positioned above the water collection reservoir of at least one pot assembly in the at least one lower row.

The liquid (typically water) entering the pot assembly, normally from a similar pot assembly located above in a staggered pattern, will collect initially in the water collection reservoir until the water collection reservoir fills up with water to the level of the overflow weir. Once at this level, the liquid overflows into the angled volume of the at least one flowerpot holder to water a plant in a pot in the at least one flowerpot holder. The liquid will then build up in the angled volume of the at least one flowerpot holder, with the level rising until it reaches the drain sump entry located in the angled base wall whereupon the liquid enters the drain sump. Once in the drain sump, the liquid can exit the pot assembly via the drain opening, typically into a lower, offset pot assembly.

The pot assembly will normally be used in concert with other pot assemblies having the same features. In particular, multiple pot assemblies can be used to create a vertical or wall garden. The pot assembly and/or system can be scaled up or down in size to adapt to larger and smaller plants, or more or fewer plants.

Typically, the pot assembly will be mounted relative to a vertical or near vertical surface. The pot assembly may be positioned above (or below) one or more other pot assemblies to allow liquid, typically water (but possibly nutrients or fertiliser or the like) to drain under gravity through the pot assembly, watering/feeding plants on the way and into one or more lower pot assemblies.

Where provided in multiples, the pot assemblies will preferably be offset laterally (horizontally) from one another. The pot assemblies may be provided in one or more rows. An upper pot assembly is typically supported on one or more lower pot assemblies. An upper pot assembly is typically supported directly on one or more lower pot assemblies. One or more support assemblies, formations or members may be provided to support an upper pot assembly relative to one or more lower pot assemblies.

An upper pot assembly may attach to or relative to one or more lower pot assemblies and one or more corresponding attachment or engagement formations may be provided on the upper pot assembly, the one or more lower pot assemblies or both.

The pot assembly will normally be mounted relative to a surface to hang. Normally, the pot assembly will hang substantially vertically. A rear wall of the pot assembly may be substantially vertical.

The drain opening may be through a base wall which is substantially horizonal. The pot assembly may be provided hung at an angle to the surface. This may assist with retention of the drain opening may be substantially vertically.

The pot assembly typically includes at least one pot holder provided with at least an angled volume for holding a pot and an angled base wall.

Any number of pot holders may be provided in a pot assembly. Normally between 2 and 6 will be provided on the pot assembly, with three or four pot holders being preferred. The pot holders are preferably spaced evenly over the length of the pot assembly. The pot holders are normally separated at least partially through the provision of at least one sidewall.

The pot assembly will normally have a rear wall. The rear wall may be planar. The rear wall will typically extend over the length of the pot assembly regardless of the number of pot holders provided. The rear wall may have at least one, and typically multiple attachment openings or assemblies provided thereon to allow the pot assembly to be mounted relative to a surface. One or more bracing or strengthening configurations may be provided on the rear wall.

Each pot holder is typically defined at least partially by a portion of the rear wall and at least one shaped wall. A forwardly extending wall may extend from the rear wall to connect the rear wall to the at least one shaped wall for the pot holders at respective ends of the pot assembly. The forwardly extending wall is typically planar.

An arcuate transition is generally provided between a forward end of the forwardly extending wall and the at least one shaped wall.

The at least one shaped wall may have any shape. The at least one shaped wall may be arcuate to define a forward part of the pot holder. **In** one form, the at least one shaped wall may be semi-circular.

The at least one shaped wall may be provided as an upper wall part and a lower wall part. The lower wall part is normally oriented at an angle to the rear wall. The lower wall part is typically cylindrical. Transition portions may be provided between the ends of the typically cylindrical lower wall part and the forwardly extending wall and/or the typically cylindrical lower wall part of an adjacent pot holder. The typically cylindrical lower wall part normally extends between the base wall of the pot holder and the upper wall part.

The upper wall part may be provided at an angle relative to the typically cylindrical lower wall part. This will normally create a divergent upper wall part. Providing a divergent upper wall part may allow more liquid to be caught for example if a spray applicator is used and will typically also allow a user to more easily insert a pot into the pot holder.

The at least one shaped wall (both upper wall part and lower wall part, if provided), will normally arc rearwardly from a forward side toward the rear wall but be spaced therefrom. On the ends of the pot assembly, the at least one shaped wall will normally be spaced from the rear wall by the forwardly extending wall. For any at least one shaped walls between the ends of the pot assembly, the respective ends of the at least one shaped walls will normally be linked by a return part.

Normally, the return part is at least partially arcuate but one or more transition parts may be provided.

Each pot holder will normally have a central axis which is angled relative to the rear wall. This typically creates an angled volume for holding a pot which in turn promotes drainage of any liquid in the pot and/or pot holder, toward a lower, forward side of the pot and/or pot holder.

In an embodiment, a drain opening is provided between adjacent pot holders in a pot assembly. Normally, the drain opening is provided in a rear portion of the pot assembly, closer to the rear wall. Normally, there is one fewer drain opening provided than the number of pot holders.

The angled base wall of the at least one pot holder is preferably angled relative to the rear wall. Typically, the angled base wall is approximately perpendicular to the angled volume (defined at least partly by the at least one shaped wall). The angled base wall will normally extend downwardly at an angle less than 90° to the plane of the rear wall (or to the surface relative to which the pot assembly is mounted) but greater than 45°. The angle will normally be between approximately 80° and 60°, more preferably between 75° and 70°.

The angled base wall will normally be shaped. The angled base wall is preferably substantially planar with one or more openings or cut outs formed thereinto for the drain sump and/or the drain sump entry for example. The angled base wall will preferably provide a surface to guide any liquid within the pot holder, forwardly and downwardly toward the front side of the pot assembly.

**In** one embodiment, the angled base wall may have a central portion and a pair of lateral wing portions separated at least partially from the central portion by portions of the drain sump. All portions of the angled base wall are preferably coplanar.

The pot assembly typically includes a drain sump with a drain opening through which liquid exits the pot assembly and a drain sump entry located in the angled base wall, the drain opening in the drain sump located below the drain sump entry.

The drain sump will normally be provided in a rear portion of the pot assembly. The drain sump will typically be provided between a pair of adjacent pot holders. The drain sump will preferably extend between the pair of adjacent pot holders. The drain sump will normally have the drain opening located therein, typically at a low point.

The drain sump is preferably shaped. **In** an embodiment, the drain sump may be arcuate when viewed in plan. A preferred shape for the drain sump is crescent shaped when viewed in plan. The respective tapered ends of the preferred crescent-shaped drain sump will normally extend at least partially into each of a pair of pot holders.

The drain sump will normally have a base or floor which typically tapers downwardly to a low point, at or in which the drain opening will normally be located. The drain opening may be located approximately centrally in the drain sump.

The drain sump entry will normally be located at the respective tapered ends of the preferred crescent-shaped drain sump, which normally extend to or into the angled base wall of the pot holder. The drain sump entry may be a ramp entry from the angled base wall of the pot holder.

A rear side of the preferred crescent-shaped drain sump may be provided with a raised dividing wall. The dividing wall will preferably at least partially define the water collection reservoir between the rear side of the or each drain sump and the rear wall of the pot assembly. The raised dividing wall will normally form the water collection reservoir, preferably together with the overflow weir.

The pot assembly typically includes a water collection reservoir located above the drain sump entry and provided with an overflow weir over which liquid flows into the angled volume of the at least one pot holder.

The raised dividing wall will typically separate the water collection reservoir, preferably together with the overflow weir from the drain sump. The bottom or base wall of the pot located in the pot holder will normally extend rearwardly in the pot holder, above the raised dividing wall.

The raised dividing wall will typically correspond in shape to the shape of a portion of the drain sump. In an embodiment in which the drain sump is crescent shaped in plan, the raised dividing wall is also typically crescent shaped in plan. At least a portion of the raised dividing wall will normally separate the water collection reservoir from the drain sump and the drain sump entries (although the wall may be lower in height in the part which is adjacent to the drain sump entries).

The bottom wall of the water collection reservoir will typically be substantially planar. The bottom wall of the water collection reservoir is located below the level of the top of the raised dividing wall.

When the pot assembly is mounted relative to a wall or surface, the bottom wall of the water collection reservoir will normally be substantially horizontal. The bottom wall of the water collection reservoir will preferably be positioned above the drain sump entry. Liquid overflowing the overflow weir will normally flow down the angled base wall of the pot holder and either directly into the drain sump entry, or more preferably, will flow downwardly over the angled base wall of the pot holder to accumulate until the level reaches the drain sump entry.

The overflow weir is typically associated with one or more raised dividing wall to at least partially define an exit from the water collection reservoir. Usually, an overflow weir is provided for each pot holder. The overflow weir is normally provided substantially centrally relative to a pot holder.

The ends of the raise dividing wall preferably extend forwardly of the overflow weir to form a guide for the liquid and to minimise the entry of any liquid directly into the drain sump entry.

Normally, where more than one pot holder is provided in a pot assembly, an overflow weir is typically located between a pair of raised dividing walls.

An upper portion of the overflow weir may have a crenelated configuration.

One or more baffle members may be provided in the drain sump. Normally, the one or more baffle members are located extending upwardly from the base of the drain sump. The baffle members may be located closer to the drain sump entry than to the drain opening. A plurality of baffle members is provided in an embodiment, spaced apart from one another to form a circuitous flow path between the drain sump entry and the drain opening.

The drain opening is typically provided in the drain sump. The drain opening may be provided with an upstand surrounding the opening. The upstand may have any shape but, if provided, will normally be cylindrical. An upper end of the upstand is preferably closed. One or more opening will normally be provided in a sidewall of the upstand. A lower end of the one or more opening may be spaced above the base of the drain sump. Normally, a plurality of openings are provided, spaced about the circumference of the upstand and through which liquid passes to access the drain opening.

The drain opening may be provided with a downcomer on an outer, lower side of the drain opening. The downcomer may direct any liquid exiting the pot assembly.

The downcomer and/or the upstand may be removable from the pot assembly.

One or more mounting formations may be provided into or through the rear wall of the pot assembly. Typically, a plurality of openings are provided, spaced across the rear wall. The periphery of the openings may be reinforced or strengthened or enlarged.

A catch member may be provided at a forward underside of one or more of the pot holders to releasably engage with a latching surface provided on a corresponding pot assembly on the preferably arcuate return part between the at least one shaped walls of adjacent pot holders. The catch member is preferably resiliently deformable and biased into an engaged position.

One or more support members may extend downwardly from an underside of the pot assembly. One or more tab members may be provided at a rear side of the pot assembly. One or more opening may be provided at an upper side of the rear wall. In use, when used in a multiple pot assembly system, one or more tabs on an upper pot assembly may be received into one or more openings on an upper side of the rear wall of a lower pot assembly to secure the pot assemblies relative to one another.

One or more shaped configurations may be provided on the rear wall. The shaped configurations may be provided in the form of one or more depressions into the rear wall. Each one or more depression may converge from the bottom to the top. A basewall may be provided in the depression which is substantially parallel to the plane of the rear wall. At least one pair of opposed sidewalls may be provided. The sidewalls in each at least one pair of sidewalls may be angled toward each other from bottom to top of the depression.

Each depression may be provided with a lower convergent portion and an upper convergent portion. The upper convergent portion may be smaller than the lower convergent portion. A step may be provided in each sidewall between the lower convergent portion and an upper convergent portion.

At least a portion of each depression will typically receive a part of a mounting clip if the pot assembly is used with a mounting assembly. Typically, a part of the upper convergent portion will correspond to a part of a mounting clip to receive the part of a mounting clip therein and suspend the pot assembly. The part of the mounting clip to be received in the upper convergent portion may correspond (in taper) to the taper of the upper convergent portion.

The pot assembly may be mounted relative to a surface using a mounting assembly. The mounting assembly may include a rail to be fastened relative to the surface and at least one clip or similar to attach to the pot assembly and mount to the rail. As mentioned briefly above, the at least one clip or similar may engage with a shaped configuration provided on the rear wall of the pot assembly.

The rail will typically be elongate with at least one and typically more than one pot assembly mounted relative thereto. When more than one pot assembly is mounted relative to a single rail, the pot assemblies will normally be provided beside one another in a line.

The rail will normally be linear, having a constant cross-section over its length.

The rail may include a mounting body. The mounting body may have a rear abutment plane to abut the surface. One or more fasteners will typically be provided extending through the mounting body to mount the rail relative to the surface.

An upper flange may be provided relative to the mounting body of the rail. The upper flange is preferably spaced from the rear abutment plane of the rail. The upper flange typically extends upwardly. The upper flange preferably terminates with a free end over which a hook provided on a clip or similar is placed. A snap fit portion or assembly with an abutment shoulder may be provided at or adjacent to the free end.

A lower flange may be provided relative to the mounting body of the rail. The lower flange is preferably spaced from the rear abutment plane of the rail. The lower flange typically extends downwardly. The lower flange preferably terminates with a free end over which a hook provided on a clip or similar is placed. A snap fit portion or assembly with an abutment shoulder may be provided at or adjacent to the free end.

The upper flange and lower flange may be coplanar. Angled transitions may be provided on the upper flange and/or lower flange.

The free end of the upper flange and the free end of the lower flange are spaced apart typically to correspond to the separation distance between an upper hook and a lower hook provided on a clip of an embodiment.

According to an embodiment, the clip will normally have a body portion and an upper hook. The upper hook is normally L-shaped with a rearwardly extending part, extending away from the body and a downwardly extending part.

A lower hook may be provided. The lower hook is normally L-shaped with a rearwardly extending part, extending away from the body and an upwardly extending part. An outer portion of the upwardly extending part may be tapered. An abutment catch surface may be provided on an inner side of the upwardly extending part.

The downwardly extending part of the upper hook may be longer than the upwardly extending part of the lower hook.

At least one part of the upper hook and/or lower hook may be deformable to allow the upper hook and/or lower hook to be snap fit to the rail.

The upper hook and lower hook, where provided, are typically provided on the same side of the body, typically extending rearwardly or toward the surface (and the rail) relative to which the pot assembly is to be mounted.

The body may be hollow. The body may have a substantially U-shaped cross-section when viewed in plan. **In** an embodiment, the body is tapered in shape from a wider dimension at the bottom to a narrower dimension at the top.

A main wall is typically provided relative to which the upper hook and the lower hook are provided. A pair of sidewalls normally extend from the main wall at an angle on the opposite side of the main wall to the upper hook and lower hook. The sidewalls may extend perpendicularly and parallel to one another. The sidewalls will typically be located one on each lateral side of the main wall. The sidewalls each typically have an abutment edge to abut a rear side of the rear wall of the pot assembly, typically the basewall of the upper convergent portion of a shaped configuration. The sidewalls each typically have a lateral abutment surface to abut a sidewall of the upper convergent portion of a shaped configuration.

The upper end of the main body may have at least one tab. The at least one tab may extend above the upper hook. The at least one tab will normally be received under an overhanging lip at an upper end of a shaped configuration on the rear wall of a pot assembly.

The clip will normally be seated in the upper convergent portion of a shaped configuration of a pot assembly creating a space between the main wall of the body of the clip and a portion of the rear wall of the pot assembly into which a lip on an upper juxtaposed pot assembly can be received in use.

### Detailed Description of the Invention

**In** order that the invention may be more clearly understood one or more embodiments thereof will now be described, by way of example only, with reference to the accompanying drawings, of which:

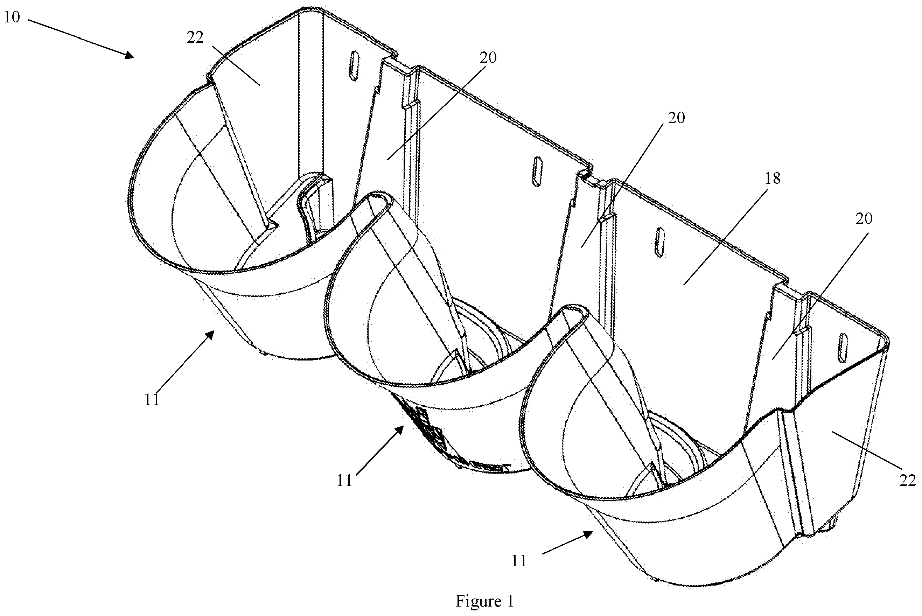

- Figure 1: is an axonometric view of a pot assembly of an embodiment.

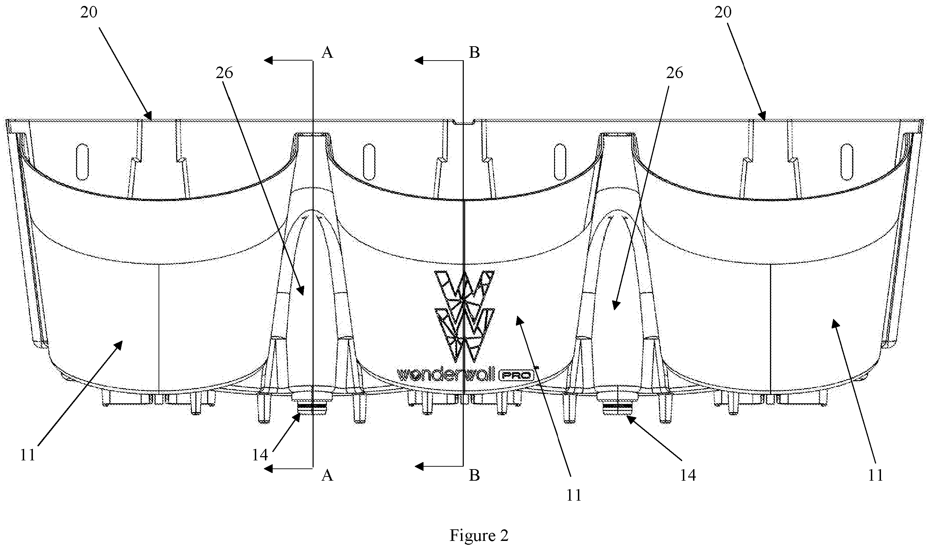

- Figure 2: is a front elevation view of the pot assembly illustrated in Figure 1.
- Figure 3: is a rear elevation view of the assembly illustrated in Figure 1.
- Figure 4: is a top view of the assembly illustrated in Figure 1.

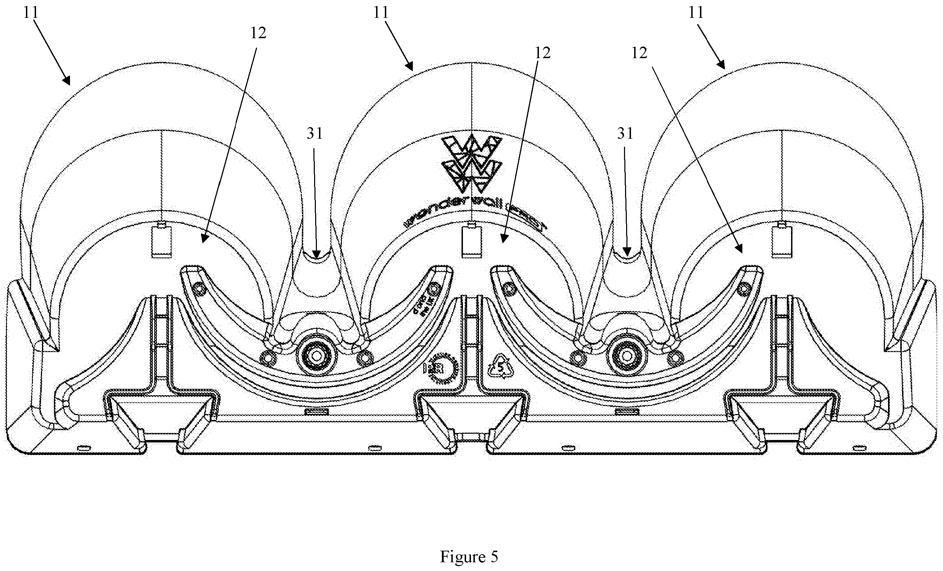

- Figure 5: is a bottom view of the assembly illustrated in Figure 1.

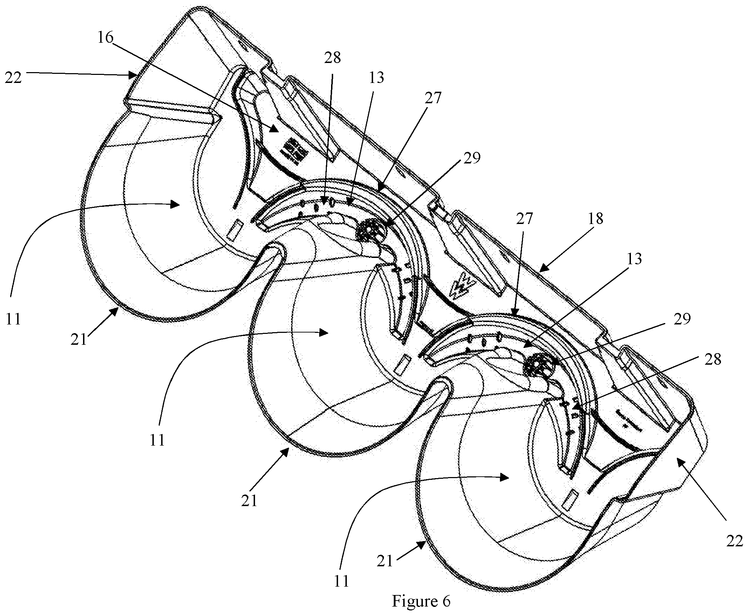

- Figure 6: is an axonometric view from above of the assembly illustrated in Figure 1.
- Figure 7: is an end elevation view of the assembly illustrated in Figure 1.
- Figure 8: is an isometric section view of the assembly illustrated in Figure 2 along line A-A.
- Figure 9: is an isometric section view of the assembly illustrated in Figure 2 along line B-B.
- Figure 10: is an isometric view of the configuration shown in Figure 9.
- Figure 11: is an isometric view from the rear of a pair of stacked pot assemblies according to an embodiment.
- Figure 12: is an isometric view from the rear of a pair of stacked pot assemblies showing a mounting assembly according to an embodiment.
- Figure 13: is a sectional view through the configuration illustrated in Figure 12 from a first angle.
- Figure 14: is a sectional view through the configuration illustrated in Figure 12 from a second angle.
- Figure 15: is an isometric view from the rear of a mounting clip according to an embodiment.
- Figure 16: is an isometric view from the front of the mounting clip illustrated in Figure 15.
- Figure 17: is a top view of the mounting clip illustrated in Figure 15.
- Figure 18: is a rear view of the mounting clip illustrated in Figure 15.
- Figure 19: is a side view of the mounting clip illustrated in Figure 15.
- Figure 20: is a front view of the mounting clip illustrated in Figure 15.
- Figure 21: is an end view of a mounting rail according to an embodiment.

With reference to the accompanying figures, a pot assembly 10 for a vertical garden is illustrated. The pot assembly 10 illustrated in the Figures comprises three pot holders 11, each pot holder provided with an angled volume for holding a pot (which is not shown) and an angled base wall 12. Two drain sumps 13 are illustrated, each with a drain opening 14 through which liquid exits the pot assembly 10 and a pair of drain sump entries 15 located in the angled base wall 12 of one of the pot holders 11(the central pot holder includes a pair of drain sump entries). The drain opening 14 in each drain sump 13 is located below the drain sump entries 15. A water collection reservoir 16 is located above the drain sump entries 15. The water collection reservoir 16 is provided with three overflow weirs 17 over which liquid flows into the angled volume of the respective pot holder 11.

The liquid (typically water) entering the pot assembly 10, normally from a similar pot assembly 10 located above in a staggered pattern, will collect initially in the water collection reservoir 16 until the water collection reservoir 16 fills up with water to the level of the overflow weir 17. Once at this level, the liquid overflows into the angled volume of the pot holder 11 to water a plant in a pot in the pot holder. The liquid will then build up in the angled volume of the pot holder 11, with the level rising until it reaches the drain sump entry 15 located in the angled base wall 12 whereupon the liquid enters the drain sump 13. Once in the drain sump 13, the liquid can exit the pot assembly 10 via the drain opening 14, typically into a lower, offset pot assembly 10.

Although not shown in the Figures, the pot assembly 10 will normally be used in concert with other pot assemblies having the same features. In particular, multiple pot assemblies can be used to create a vertical or wall garden.

Typically, the pot assembly 10 is mounted relative to a vertical or near vertical surface. The pot assembly10 may be positioned above (or below) one or more other pot assemblies to allow liquid, typically water (but possibly nutrients or fertiliser or the like) to drain under gravity through the pot assembly, watering/feeding plants on the way and into one or more lower pot assemblies.

Where provided in multiples, the pot assemblies will preferably be offset laterally (horizontally) from one another. The pot assemblies may be provided in one or more rows. An upper pot assembly is typically supported on one or more lower pot assemblies. An upper pot assembly is typically supported directly on one or more lower pot assemblies. One or more support assemblies, formations or members may be provided to support an upper pot assembly relative to one or more lower pot assemblies.

An upper pot assembly may attach to or relative to one or more lower pot assemblies and one or more corresponding attachment or engagement formations may be provided on the upper pot assembly, the one or more lower pot assemblies or both.

The pot assembly will normally be mounted relative to a surface to hang. Normally, the pot assembly will hang substantially vertically. A rear wall of the pot assembly may be substantially vertical.

The drain opening 14 may be through a base wall which is substantially horizonal. The pot assembly 10 may be provided hung at an angle to the surface. This may assist with retention of the drain opening 14 substantially vertically.

Any number of pot holders 11 may be provided in a pot assembly 10. Normally between 2 and 6 will be provided on the pot assembly. The pot assembly illustrated has three pot holders 11 spaced evenly over the length of the pot assembly 10. The pot holders 11 are separated at least partially by at least a portion of a shaped wall which forms the pot holder as explained further below.

The pot assembly 10 has a rear wall 18 which as shown, is normally substantially planar. The rear wall 18 as shown extends over the length of the pot assembly 10. The rear wall 18 has multiple attachment openings 19 provided thereon to allow the pot assembly 10 to be mounted relative to a surface.

One or more shaped configurations 20 may be provided on the rear wall 18.

Each pot holder 11 is typically defined at least partially by a portion of the rear wall 18 and at least one shaped wall 21. In the illustrated embodiment, a forwardly extending wall 22 extends from the rear wall 18 to connect the rear wall 18 to the at least one shaped wall 21 for the pot holders 11 at respective ends of the pot assembly 10. The forwardly extending wall 22 is typically planar.

An arcuate transition is generally provided between a forward end of the forwardly extending wall 22 and the at least one shaped wall 21 and between the forwardly extending wall 22 and the rear wall 18.

The shaped wall 21 may have any shape. The at least one shaped wall 21 illustrated is arcuate to define a curved forward part of the pot holder. In one form, the at least one shaped wall may be semi-circular.

In the illustrated embodiment, the shaped wall 21 is provided as an upper wall part 23 and a lower wall part 24. The lower wall part 24 is normally oriented at an angle to the rear wall 18. The lower wall part 24 is generally cylindrical. Transition portions are provided between the ends of the generally cylindrical lower wall part 24 and the forwardly extending wall 22 and/or the generally cylindrical lower wall part 24 of an adjacent pot holder 11. The typically cylindrical lower wall part 24 normally extends between the base wall 12 of the pot holder 10 and the upper wall part 23.

The upper wall part 23 is provided at an angle relative to the typically cylindrical lower wall part 24. As shown in the Figures, this creates a divergent upper wall part 23. Providing a divergent upper wall part 23 may allow more liquid to be caught for example if a spray applicator is used and will typically also allow a user to more easily insert a pot into the pot holder 11.

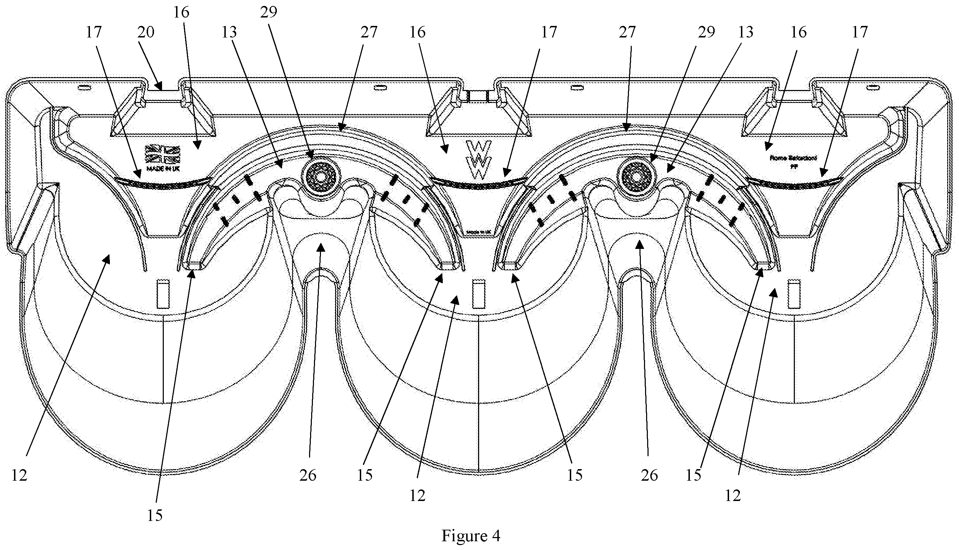

The shaped wall 21 (both upper wall part 23 and lower wall part 24, if provided), will normally arc rearwardly from a forward side toward the rear wall 18 but be spaced therefrom. On the ends of the pot assembly 10, the shaped wall 21 is spaced from the rear wall 18 by the forwardly extending wall 22. For any shaped walls 21 between the ends of the pot assembly 10, the respective ends of the shaped walls 21 will normally be linked by a linking return part 26 as best illustrated in Figure 4.

Normally, the linking return part 26 is at least partially arcuate but one or more transition parts may be provided to link the respective lower walls 24 of adjacent pot holders 10 and respective upper walls 23 of adjacent pot holders 10.

Each pot holder 11 will normally have a central axis which is angled relative to the rear wall 18. This creates an angled volume for holding a pot (not shown) which in turn promotes drainage of any liquid in the pot and/or pot holder 10, toward a lower, forward side of the pot and/or pot holder 10.

In an embodiment, a drain opening 14 is provided between adjacent pot holders 11 in a pot assembly 10. Normally, the drain opening 14 is provided in a rear portion of the pot assembly 10, closer to the rear wall 18. Normally, there is one fewer drain opening 2147 provided than the number of pot holders 11.

The angled base wall 12 of each pot holder 11 is preferably angled relative to the rear wall 18. Typically, the angled base wall 12 is approximately perpendicular to the axis of the angled volume (defined at least partly by the shaped wall 21). The angled base wall 12 will normally extend downwardly at an angle less than 90° to the plane of the rear wall 18 (or to the surface relative to which the pot assembly 10 is mounted) but greater than 45°. The angle will normally be between approximately 80° and 60°, more preferably between 75° and 70°.

The angled base wall 12 is normally shaped. The angled base wall 12 is preferably substantially planar with one or more openings or cut outs formed thereinto for the drain sump 13 and/or the drain sump entry 15 for example. The angled base wall 12 will preferably provide a surface to guide any liquid within the pot holder 11, forwardly and downwardly toward the front side of the pot assembly 10.

In the embodiment illustrated, the angled base wall 12 has a central portion and a pair of lateral wing portions separated at least partially from the central portion by portions of the drain sump 13. All portions of the angled base wall 12 are preferably coplanar.

The drain sump 13 will normally be provided in a rear portion of the pot assembly 10. The drain sump 13 will typically be provided extending between a pair of adjacent pot holders 11. The drain opening 14 is located in the drain sump 13, typically at a low point.

As best illustrated in Figure 4, the drain sump 13 is preferably shaped. In this embodiment, the drain sump 13 is crescent shaped when viewed in plan. As shown, the respective tapered ends of the crescent-shaped drain sump 13 extend at least partially into each of a pair of pot holders 11.

The drain sump 13 has a base or floor which typically tapers downwardly to a low point, at or in which the drain opening 14 will normally be located. The drain opening 14 may be located approximately centrally in the drain sump 13.

The drain sump entry 15 will normally be located at the respective tapered ends of the crescent-shaped drain sump 13, which normally extend to or into the angled base wall 12 of the pot holder 11. The drain sump entry 15 of the embodiment is a ramp entry from the angled base wall 12 of the pot holder 11.

A rear side of the crescent-shaped drain sump 13 is provided with a raised dividing wall 27. The dividing wall 27 will preferably at least partially define the water collection reservoir 16 between the rear side of each drain sump 13 and the rear wall 18 of the pot assembly 10. The raised dividing wall 27 will normally form the water collection reservoir 16 together with the overflow weir 17.

The bottom or base wall of the pot located in the pot holder 11 will normally extend rearwardly in the pot holder 11, above the raised dividing wall 27.

The raised dividing wall 27 will typically correspond in shape to the shape of a portion of the drain sump 13. In the illustrated embodiment in which the drain sump 13 is crescent shaped in plan, the raised dividing wall 27 is also typically crescent shaped in plan. At least a portion of the raised dividing wall 27 will normally separate the water collection reservoir 16 from the drain sump 13 and the drain sump entries 15 (although the raised dividing wall 27 may be lower in height in the part which is adjacent to the drain sump entries 15).

The bottom wall of the water collection reservoir 16 will typically be substantially planar. The bottom wall of the water collection reservoir 16 is located below the level of the top of the raised dividing wall 27 to form a reservoir.

When the pot assembly 10 is mounted relative to a wall or surface, the bottom wall of the water collection reservoir 16 will normally be substantially horizontal. The bottom wall of the water collection reservoir 16 will preferably be positioned above the drain sump entry 15. Liquid overflowing the overflow weir 17 will normally flow down the angled base wall 12 of the pot holder 11 and preferably then flow downwardly over the angled base wall 12 of the pot holder 11 to accumulate in a lower, forward part of the pot holder 11 until the level reaches the drain sump entry 15.

The overflow weir 17 is typically associated with one or more raised dividing wall 27 to at least partially define an exit from the water collection reservoir 16. Usually, an overflow weir 17 is provided for each pot holder 11. The overflow weir 17 is normally provided substantially centrally relative to a pot holder 11.

Normally, where more than one pot holder 11 is provided in a pot assembly 10 as shown in the Figures, an overflow weir 17 is typically located between a pair of raised dividing walls 27.

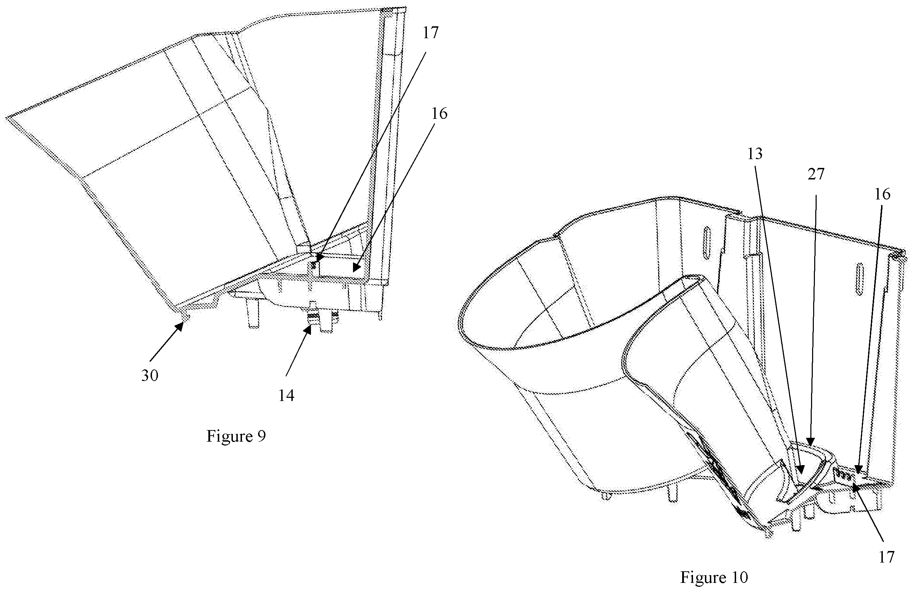

An upper portion of the overflow weir 17 may have a crenelated configuration as shown in Figure 10.

One or more baffle members 28 may be provided in the drain sump 13. Normally, the one or more baffle members 28 are located extending upwardly from the base of the drain sump 13. The baffle members 28 may be located closer to the drain sump entry 15 than to the drain opening 14. A plurality of baffle members 28 is provided in an embodiment, spaced apart from one another to form a circuitous flow path between the drain sump entry 15 and the drain opening 14.

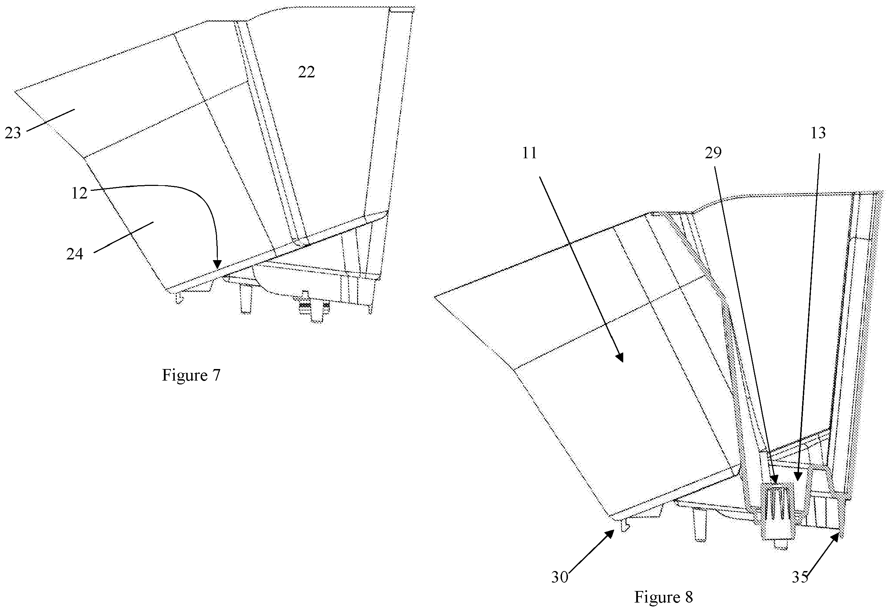

The drain opening 14 is typically provided in the drain sump 13. The drain opening 14 may be provided with an upstand 29 surrounding the opening 14. The upstand 29 may have any shape but, if provided, will normally be cylindrical as shown in Figure 8. An upper end of the upstand 29 is preferably closed. A plurality of openings are provided, spaced about the circumference of the upstand 29 and through which liquid passes to access the drain opening. A lower end of the openings is spaced above the base of the drain sump 13.

A catch member 30 may be provided at a forward underside of one or more of the pot holders 11 to releasably engage with a latching surface 31 provided on a corresponding pot assembly 10 on the preferably arcuate return part between the shaped walls 21 of adjacent pot holders 11. The catch member 30 is preferably resiliently deformable and biased into an engaged position.

One or more support members 32 may extend downwardly from an underside of the pot assembly.

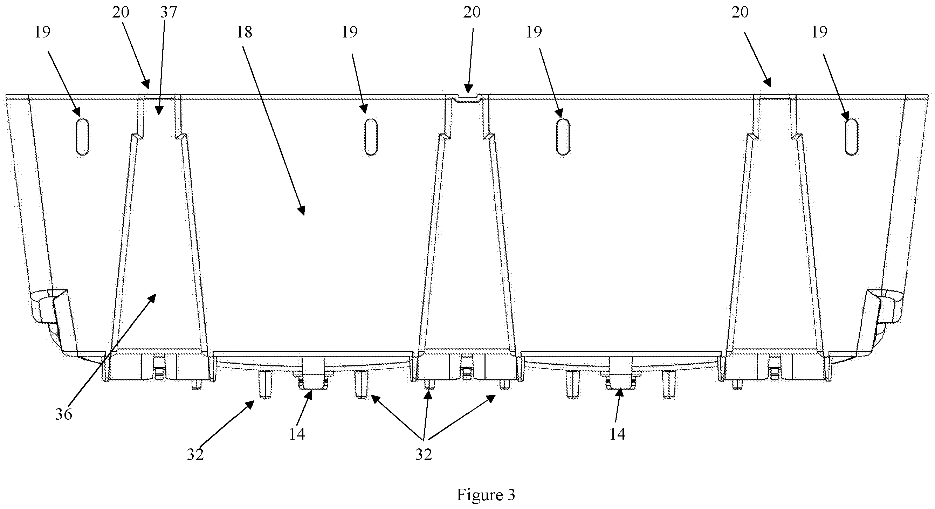

As illustrated in Figure 3, a number of shaped configurations 20 are provided on the rear wall 18. In the illustrated embodiment, the shaped configurations 20 are provided in the form of depressions into the rear wall 18. Each depression converges from the bottom to the top. A basewall may be provided in the depression which is substantially parallel to the plane of the rear wall. At least one pair of opposed sidewalls may be provided. The sidewalls in each at least one pair of sidewalls are angled toward each other from bottom to top of the depression.

Each depression is provided with a lower convergent portion 36 and an upper convergent portion 37. The upper convergent portion 37 is smaller (in both height and width) than the lower convergent portion 36. A step is provided in each sidewall between the lower convergent portion 36 and the upper convergent portion 37.

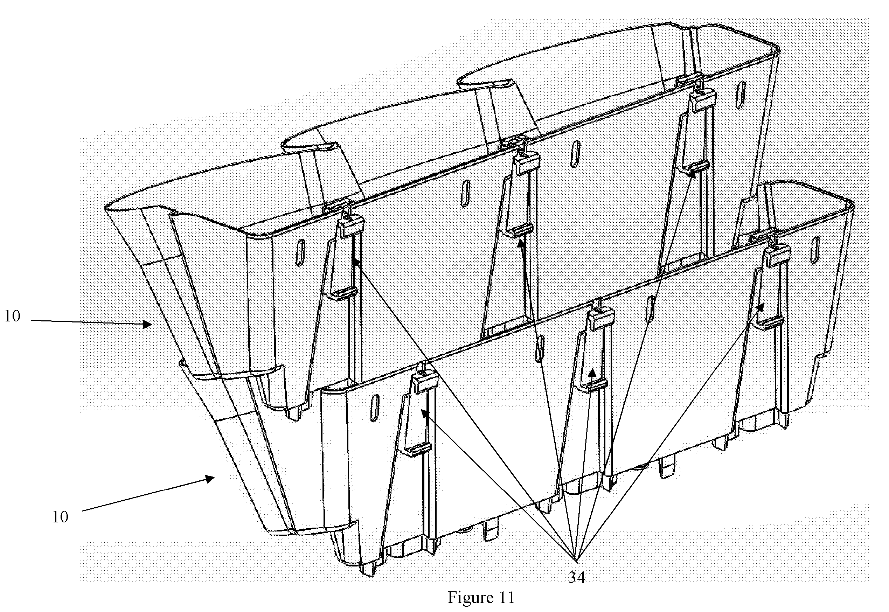

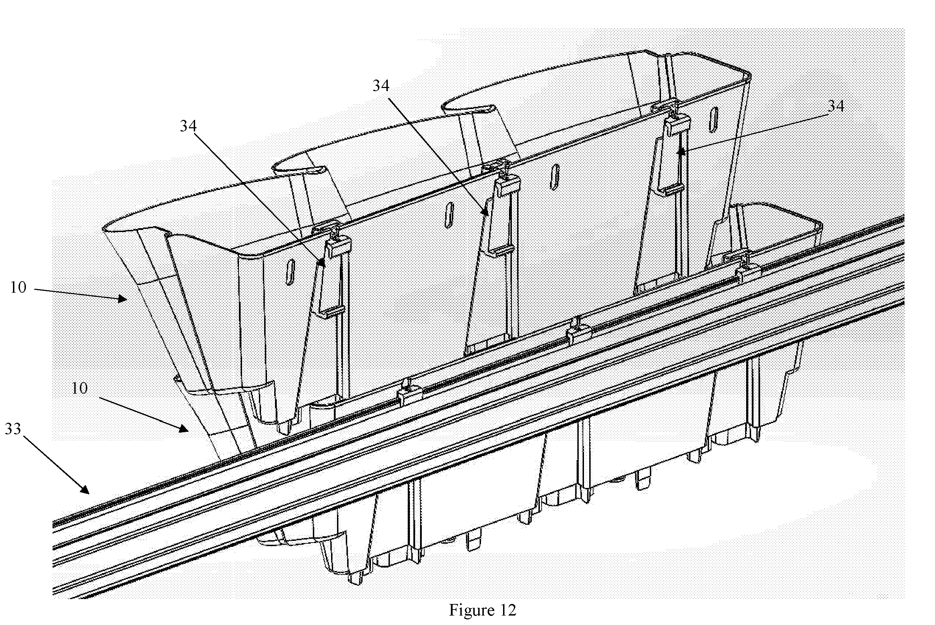

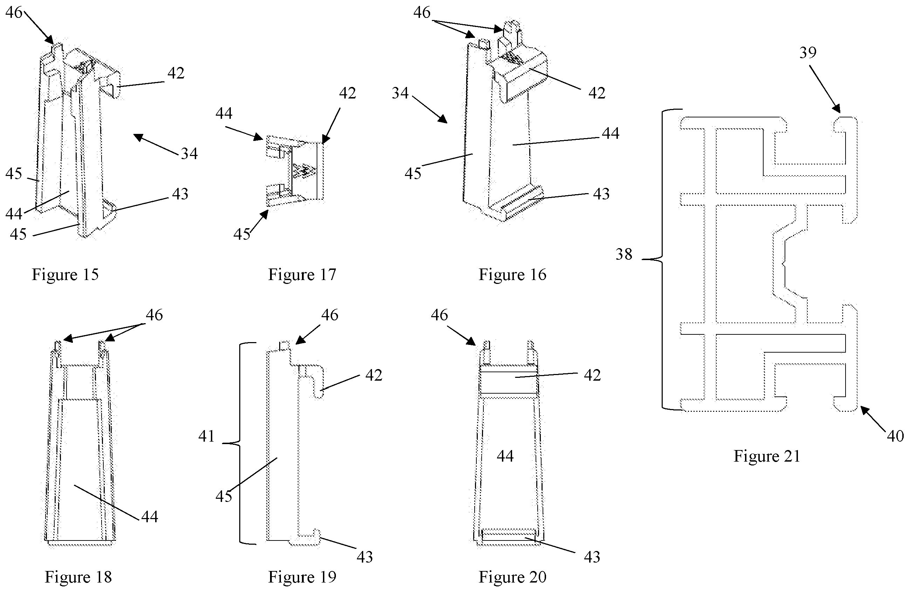

As illustrated in Figures 11 and 12, the upper convergent portion 37 of each depression receives a part of a mounting clip 34 if the pot assembly is used with a mounting assembly. Typically, a part of the upper convergent portion 37 will correspond to a part of a mounting clip 34 such as that illustrated in Figures 15 to 20 to receive the part of the mounting clip 34 therein and suspend the pot assembly. The part of the mounting clip 34 to be received in the upper convergent portion 37 may correspond (in taper) to the taper of the upper convergent portion 37.

The pot assembly may be mounted relative to a surface using a mounting assembly. As shown in Figure12 to 14, the mounting assembly may include a rail 33 to be fastened relative to the surface and at least one clip 34 to attach to the pot assembly 10 and mount to the rail 22.

The rail 33 is normally elongate as shown in Figure 12 with at least one and typically more than one pot assembly 10 mounted relative thereto. When more than one pot assembly 10 is mounted relative to a single rail 33, the pot assemblies 10 will normally be provided beside one another in a line.

The rail will normally be linear, having a constant cross-section over its length.

The illustrated rail includes a mounting body 38 with a rear abutment plane to abut the surface. One or more fasteners (not shown) will typically be provided extending through the mounting body 38 to mount the rail relative to the surface.

An upper flange 39 may be provided relative to the mounting body 38 of the rail 33. The upper flange 39 is preferably spaced from the rear abutment plane of the rail 33. The upper flange 39 extends upwardly. The upper flange 39 terminates with a free end over which a hook provided on a clip 34 or similar is placed. A snap fit portion or assembly with an abutment shoulder may be provided at or adjacent to the free end.

A lower flange 40 may be provided relative to the mounting body 38 of the rail 33. The lower flange 40 is preferably spaced from the rear abutment plane of the rail 33. The lower flange 40 typically extends downwardly. The lower flange 40 preferably terminates with a free end over which a hook provided on a clip 34 or similar is placed. A snap fit portion or assembly with an abutment shoulder may be provided at or adjacent to the free end.

As shown in Figure 21, the upper flange 39 and lower flange 40 are coplanar. Angled transitions are provided on the upper flange 39 and/or lower flange 40.

The free end of the upper flange 39 and the free end of the lower flange 40 are spaced apart typically to correspond to the separation distance between an upper hook and a lower hook provided on a clip 34.

In the illustrated embodiment, particularly Figures 15 to 20, the clip 34 has a body portion 41 and an upper hook 42. The upper hook 42 is normally L-shaped with a rearwardly extending part, extending away from the body and a downwardly extending part. An example is shown in Figures 15 to 20.

In the illustrated embodiment, a lower hook 43 is also provided. The lower hook 43 is normally L-shaped with a rearwardly extending part, extending away from the body and an upwardly extending part. An outer portion of the upwardly extending part is tapered. An abutment catch surface is provided on an inner side of the upwardly extending part of the lower hook 43. An example is shown in Figures 15 to 20.

The downwardly extending part of the upper hook 42 is longer than the upwardly extending part of the lower hook 43.

At least one part of the upper hook 42 and/or lower hook 43 is deformable to allow the upper hook 42 and/or lower hook 43 to be snap fit to the rail 33.

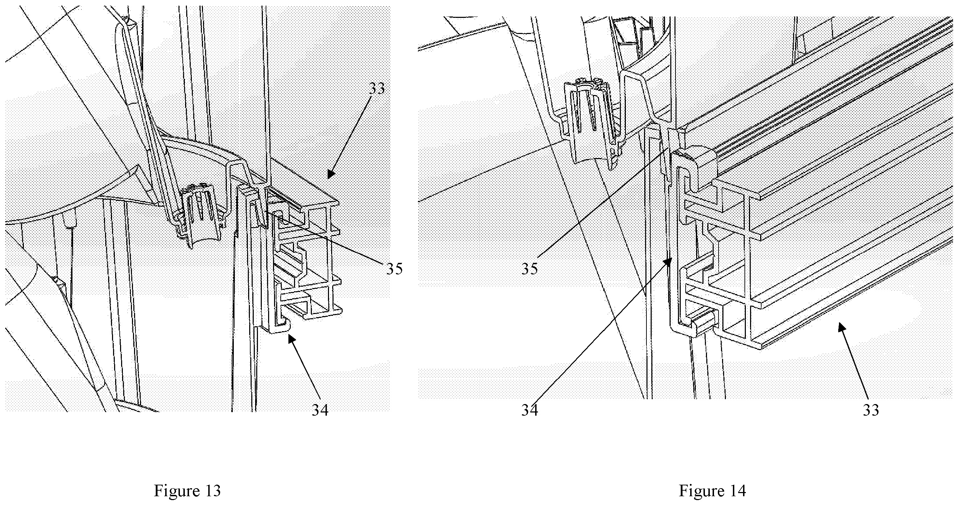

The upper hook 42 and lower hook 43 are provided on the same side of the body 41, typically extending rearwardly or toward the surface (and the rail 33) relative to which the pot assembly 10 is to be mounted as shown in Figures 13 and 14.

The body 41 has a substantially U-shaped cross-section when viewed in plan. In an embodiment, the body 41 is tapered in shape from a wider dimension at the bottom to a narrower dimension at the top.

A main wall 44 is typically provided relative to which the upper hook 42 and the lower hook 43 are provided. A pair of sidewalls 45 normally extend from the main wall 44 at an angle on the opposite side of the main wall 44 to the upper hook 42 and lower hook 43. The sidewalls 45 extend perpendicularly and parallel to one another in the illustrated embodiment. The sidewalls 45 are located one on each lateral side of the main wall 44. The sidewalls 45 each typically have an abutment edge to abut a rear side of the rear wall of the pot assembly 10, typically the basewall of the upper convergent portion of a shaped configuration. The sidewalls 45 each typically have an outer lateral abutment surface to abut a sidewall of the upper convergent portion of a shaped configuration.

The upper end of the body 41 has at least one tab 46. The tabs 46 extend above the upper hook 42. The tabs 46 will normally be received under an overhanging lip at an upper end of a shaped configuration on the rear wall of a pot assembly 10.

The clip 34 will normally be seated in the upper convergent portion 37 of a shaped configuration 20 of a pot assembly 10 creating a space between the main wall 44 of the body 41 of the clip 34 and a portion of the rear wall 18 of the pot assembly 10 into which a lip 35 on an upper juxtaposed pot assembly 10 can be received, in use.

The one or more embodiments are described above by way of example only. Many variations are possible without departing from the scope of protection afforded by the appended claims.

## Claims

1. A pot assembly (10) for a vertical garden, the pot assembly (10) comprising:
a. at least one pot holder (11) provided with at least an angled volume for holding a pot and an angled base wal (12);
b. a drain sump (13) with a drain opening (14) through which liquid exits the pot assembly (10) and a drain sump entry (15) located in the angled base wall, (12) the drain opening (14) in the drain sump (13) located below the drain sump entry (15) ; and
c. a water collection reservoir (16) located above the drain sump entry (15) and provided with an overflow weir (17) over which liquid flows into the angled volume of the at least one pot holder. (11)

2. A pot assembly (10) as claimed in claim 1 wherein the pot assembly comprises an elongate rear wall and each at least one pot holder (11) is defined at least partially by a portion of the rear wall and at least one shaped forward wall.

3. A pot assembly (10) as claimed in claim 2 wherein the at least one shaped wall is arcuate to define a forward part of the pot holder. (11)

4. A pot assembly (10) as claimed in either claim 2 or claim 3 wherein the lower wall part is oriented at an acute angle to the rear wall.

5. A pot assembly (10) as claimed in any one of the preceding claims wherein the angled base wall is perpendicular to the angled volume.

6. A pot assembly (10) as claimed in any one of the preceding claims wherein the drain sump (13) is provided extending between a pair of adjacent pot holders (11)

7. A pot assembly (10) as claimed in any one of the preceding claims wherein the drain opening (14) is located in the drain sump. (13)

8. A pot assembly (10) as claimed in any one of the preceding claims wherein the drain sump (13) is crescent shaped when viewed in plan, with respective ends of the crescent-shaped drain sump (13) extending at least partially into each of a pair of pot holders (11) .

9. A pot assembly (10)
as claimed in any one of the preceding claims wherein a rear side of the drain sump (13) is provided with a raised dividing wall, (27) at least partially define the water collection reservoir together with the overflow weir. (17)

10. A pot assembly (10) as claimed in any one of the preceding claims wherein a bottom wall of the water collection reservoir (16) is positioned above the drain sump entry (15) configured such that liquid overflowing the overflow weir (17) flows down the angled base wall of the pot holder to accumulate in the pot holder (11) until a level reaches the drain sump entry.

11. A pot assembly (10) as claimed in any one of the preceding claims wherein an upper portion of the overflow weir has a crenelated configuration.

12. A pot assembly (10) as claimed in any one of the preceding claims wherein one or more baffle (28) members are provided in the drain sump. (13)

13. A pot assembly (10) as claimed in any one of the preceding claims wherein the drain opening is provided with an upstand surrounding the drain opening and one or more opening provided in a sidewall of the upstand.

14. A pot assembly (10) as claimed in any one of the preceding claims wherein at least one catch member is provided at a forward underside of one or more of the pot holders and a latching surface is provided between one or more of the pot holders (11).

15. A stagger stacked pot system for a vertical garden, the system comprising two or more pot assemblies (10) , at least some of the pot assemblies (10) comprising
a. at least one pot holder (11) provided with at least an angled volume for holding a pot and an angled base wal (12) ;
b. a drain sump (13) with a drain opening (14) through which liquid exits the pot assembly (10) and a drain sump entry (15) located in the angled base wall, the drain opening (14) in the drain sump (13) located below the drain sump entry (15)
c. a water collection reservoir (16) located above the drain sump entry (15) and provided with an overflow weir (17) over which liquid flows into the angled volume of the at least one pot holder;
wherein the pot assemblies (10) are provided in at least one upper row and at least one lower row with the drain outlet of at least one pot assembly in the at least one upper row positioned above the water collection reservoir (16) of at least one pot assembly (10) in the at least one lower row.

## Patentansprüche

1. Topfanordnung (10) für einen vertikalen Garten, wobei die Topfanordnung (10) aufweist:
a. mindestens einen Topfhalter (11), der mit mindestens einem abgewinkelten Volumen zum Halten eines Topfes und einer abgewinkelten Basiswand (12) versehen ist;
b. einen Ablaufsumpf (13) mit einer Ablauföffnung (14), durch welche die Flüssigkeit aus der Topfanordnung (10) austritt, und einem Ablaufsumpfeingang (15), der sich in der abgewinkelten Basiswand (12) befindet, wobei sich die Ablauföffnung (14) im Ablaufsumpf (13) unterhalb des Ablaufsumpfeingangs (15) befindet; und
c. einen Wassersammelbehälter (16), der sich oberhalb des Ablaufsumpfeingangs (15) befindet und mit einem Überlaufwehr (17) versehen ist, über welches Flüssigkeit in das abgewinkelte Volumen des mindestens einen Topfhalters (11) fließt.

2. Topfanordnung (10) wie in Anspruch 1 beansprucht, wobei die Topfanordnung eine längliche Rückwand aufweist und jeder, mindestens eine Topfhalter (11) zumindestens teilweise durch einen Abschnitt der Rückwand und mindestens durch eine geformte Vorderwand definiert ist.

3. Topfanordnung (10) wie in Anspruch 2 beansprucht, wobei die mindestens eine geformte Wand bogenförmig ist, um einen vorderen Teil des Topfhalters (11) zu definieren.

4. Topfanordnung (10) wie entweder in Anspruch 2 oder 3 beansprucht, wobei das untere Wandbestandteil in einem spitzen Winkel zur Rückwand ausgerichtet ist.

5. Topfanordnung (10) wie in irgendeinem der vorhergehenden Ansprüche beansprucht, wobei die abgewinkelte Basiswand senkrecht zum abgewinkelten Volumen ist.

6. Topfanordnung (10) wie in irgendeinem der vorhergehenden Ansprüche beansprucht, wobei der Ablaufsumpf (13) vorgesehen ist, sich zwischen einem Paar benachbarter Topfhaltern (11) zu erstrecken.

7. Topfanordnung (10) wie in irgendeinem der vorhergehenden Ansprüche beansprucht, wobei sich die Ablauföffnung (14) im Ablaufsumpf (13) befindet.

8. Topfanordnung (10) wie in irgendeinem der vorhergehenden Ansprüche beansprucht, wobei sich der Ablaufsumpf (13), wenn im Grundriss betrachtet. sichelförmig ist, mit entsprechenden Enden des sichelförmigen Ablaufsumpfes (13) zumindest teilweise, sich in jedes Paar der Topfhalter (11) erstreckt.

9. Topfanordnung (10) wie in irgendeinem der vorhergehenden Ansprüche beansprucht, wobei eine Rückseite des Ablaufsumpfes (13) mit einer erhöhten Trennwand (27) versehen ist, die zusammen mit dem Überlaufwehr (17) zumindest teilweise das Wassersammelreservoir definiert.

10. Topfanordnung (10) wie in irgendeinem der vorhergehenden Ansprüche beansprucht, wobei eine Bodenwand des Wassersammelreservoirs (16) über dem Ablaufsumpfeingang (15) positioniert ist, der so konfiguriert ist, dass Flüssigkeit, die über das Überlaufwehr (17) fließt, an der abgewinkelten Basiswand des Topfhalters hinunterfließt, um sich im Topfhalter (11) anzusammeln, bis ein Pegel den Ablaufsumpfeinlass erreicht.

11. Topfanordnung (10) wie in irgendeinem der vorhergehenden Ansprüche beansprucht, wobei ein oberer Abschnitt des Überlaufwehres eine zinnenbewehrte Ausbildung hat.

12. Topfanordnung (10) wie in irgendeinem der vorhergehenden Ansprüche beansprucht, wobei ein oder mehrere Leitblechglieder (28) in dem Ablaufsumpf (13) vorgesehen sind.

13. Topfanordnung (10) wie in irgendeinem der vorhergehenden Ansprüche beansprucht, wobei die Ablauföffnung mit einer, die Ablauföffnung umgebenden Aufkantung versehen ist und eine oder mehrere Öffnungen ist/sind in einer Seitenwand der Aufkantung vorhanden.

14. Topfanordnung (10) wie in irgendeinem der vorhergehenden Ansprüche beansprucht, wobei mindestens ein Klemmglied an einer vorderen Unterseite von einem oder mehreren Topfhaltern vorgesehen ist und eine Einrastfläche zwischen einem oder mehreren von den Topfhaltern (11) vorgesehen ist.

15. Versetzt angeordnetes, gestapeltes Topfsystem für einen vertikalen Garten, wobei das System zwei oder mehrere Topfanordnungen (10) aufweist, wobei zu mindestens einige der Topfanordnungen (10) aufweisen
a. mindestens einen Topfhalter (11), der mit mindestens einem abgewinkelten Volumen zum Halten eines Topfes und einer abgewinkelten Basiswand (12) versehen ist.
b. einen Ablaufsumpf (13) mit einer Ablauföffnung (14), durch welche Flüssigkeit die Topfanordnung (10) verläßt, und einem Ablaufsumpfeingang (15), der sich in der abgewinkelten Basiswand befindet, wobei sich die Ablauföffnung (14) im Ablaufsumpf (13) unterhalb des Ablaufsumpfeingangs (15) befindet.
c. ein Wassersammelreservoir (16), das sich oberhalb des Ablaufsumpfeingangs (15) befindet und mit einem Überlaufwehr (17) versehen ist, über welches Flüssigkeit in das abgewinkelte Volumen des mindestens einen Topfhalters fließt,
wobei die Topfanordnungen (10) in mindestens einer oberen Reihe und in mindestens einer unteren Reihe vorgesehen sind, mit dem Ablaufauslass der mindestens einen Topfanordnung in der mindestens einen oberen Reihe positioniert über dem Wassersammelreservoir (16) von der mindestens einen Topfanordnung (10) in der mindestens einen unteren Reihe.

## Revendications

1. Ensemble de pot (10) pour un jardin vertical, l'ensemble de pot (10) comprenant :
a. au moins un porte-pot (11) pourvu d'au moins un volume incliné de support de pot et d'une paroi de base inclinée (12) ;
b. un puisard de vidange (13) avec une ouverture de vidange (14) par laquelle du liquide sort de l'ensemble de pot (10) et une entrée de puisard de vidange (15) située dans la paroi de base inclinée (12), l'ouverture de vidange (14) dans le puisard de vidange (13) étant située sous l'entrée de puisard de vidange (15) ; et
c. un réservoir de collecte d'eau (16) situé au-dessus de l'entrée de puisard de vidange (15) et pourvu d'un déversoir de trop-plein (17) au-dessus duquel du liquide s'écoule dans le volume incliné de l'au moins un porte-pot (11).

2. Ensemble de pot (10) selon la revendication 1, dans lequel l'ensemble de pot comprend une paroi arrière allongée et chaque au moins un porte-pot (11) est défini au moins partiellement par une portion de la paroi arrière et au moins une paroi avant formée.

3. Ensemble de pot (10) selon la revendication 2, dans lequel l'au moins une paroi formée est arquée pour définir une partie avant du porte-pot (11).

4. Ensemble de pot (10) selon l'une ou l'autre de revendication 2 ou de la revendication 3, dans lequel la partie de paroi inférieure est orientée selon un angle aigu par rapport à la paroi arrière.

5. Ensemble de pot (10) selon l'une quelconque des revendications précédentes, dans lequel la paroi de base inclinée est perpendiculaire au volume incliné.

6. Ensemble de pot (10) selon l'une quelconque des revendications précédentes, dans lequel le puisard de vidange (13) est prévu s'étendant entre une paire de porte-pot adjacents (11).

7. Ensemble de pot (10) selon l'une quelconque des revendications précédentes, dans lequel l'ouverture de vidange (14) est située dans le puisard de vidange (13).

8. Ensemble de pot (10) selon l'une quelconque des revendications précédentes, dans lequel le puisard
de vidange (13) est en forme de croissant lorsqu'il est vu en plan, des extrémités respectives du puisard de vidange (13) en forme de croissant s'étendant au moins partiellement dans chacun d'une paire de porte-pot (11).

9. Ensemble de pot (10) selon l'une quelconque des revendications précédentes, dans lequel un côté arrière du puisard de vidange (13) est pourvu d'une paroi de séparation surélevée (27), définissant au moins partiellement le réservoir de collecte d'eau avec le déversoir de trop-plein (17).

10. Ensemble de pot (10) selon l'une quelconque des revendications précédentes, dans lequel une paroi basse du réservoir de collecte d'eau (16) est positionnée au-dessus de l'entrée de puisard de vidange (15) configurée de sorte que du liquide débordant du déversoir de trop-plein (17) s'écoule le long de la paroi de base inclinée du porte-pot pour s'accumuler dans le porte-pot (11) jusqu'à ce qu'un niveau atteigne l'entrée de puisard de vidange.

11. Ensemble de pot (10) selon l'une quelconque des revendications précédentes, dans lequel une portion supérieure du déversoir de trop-plein présente une configuration crénelée.

12. Ensemble de pot (10) selon l'une quelconque des revendications précédentes, dans lequel un ou plusieurs organes déflecteurs (28) sont prévus dans le puisard de vidange (13).

13. Ensemble de pot (10) selon l'une quelconque des revendications précédentes, dans lequel l'ouverture de vidange est pourvue d'une rehausse entourant l'ouverture de vidange et d'une ou de plusieurs ouvertures prévues dans une paroi latérale de la rehausse.

14. Ensemble de pot (10) selon l'une quelconque des revendications précédentes, dans lequel au moins un organe de retenue est prévu sur une face inférieure avant d'un ou de plusieurs des porte-pot et une surface de verrouillage est prévue entre un ou plusieurs des porte-pot (11).

15. Système de pot empilé décalé pour un jardin vertical, le système comprenant deux ensembles pots (10) ou plus, au moins certains des ensembles pots (10) comprenant
a. au moins un porte-pot (11) pourvu d'au moins un volume incliné pour le port d'un pot et d'une paroi de base inclinée (12)
b. un puisard de vidange (13) avec une ouverture de vidange (14) par laquelle du liquide sort de l'ensemble de pot (10) et une entrée de puisard de vidange (15) située dans la paroi de base inclinée, l'ouverture de vidange (14) dans le puisard de vidange (13) étant située sous l'entrée de puisard de vidange (15)
c. un réservoir de collecte d'eau (16) situé au-dessus de l'entrée de puisard de vidange (15) et pourvu d'un déversoir de trop-plein (17) au-dessus duquel du liquide s'écoule dans le volume incliné de l'au moins un porte-pot ;
dans lequel les ensembles pots (10) sont prévus dans au moins une rangée supérieure et au moins une rangée inférieure avec la sortie de vidange d'au moins un ensemble de pot dans l'au moins une rangée supérieure positionnée au-dessus du réservoir de collecte d'eau (16) d'au moins un ensemble de pot (10) dans l'au moins une rangée inférieure.
